(19) Europäisches Patentamt
European Patent Office
Office européen des brevets

(11) **EP 2 209 860 B1**

## (12) EUROPEAN PATENT SPECIFICATION

(45) Date of publication and mention
of the grant of the patent:
**23.08.2017 Bulletin 2017/34**

(21) Application number: **08849375.4**

(22) Date of filing: **13.11.2008**

(51) Int Cl.:
*C09D 183/08* $^{(2006.01)}$    *C09D 5/00* $^{(2006.01)}$
*G02B 1/11* $^{(2015.01)}$    *C09D 7/12* $^{(2006.01)}$
*C08K 3/22* $^{(2006.01)}$

(86) International application number:
**PCT/KR2008/006702**

(87) International publication number:
**WO 2009/064127 (22.05.2009 Gazette 2009/21)**

(54) **COATING COMPOSITION FOR ANTIREFLECTION AND ANTIREFLECTION FILM PREPARED BY USING THE SAME**

ANTIREFLEKTIVE BESCHICHTUNGSZUSAMMENSETZUNG UND DAMIT HERGESTELLTE ANTIREFLEXIONSFOLIE

COMPOSITION DE REVÊTEMENT ANTIREFLET, ET FILM ANTIREFLET PRÉPARÉ AVEC CETTE COMPOSITION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **13.11.2007 KR 20070115343**

(43) Date of publication of application:
**28.07.2010 Bulletin 2010/30**

(73) Proprietor: **LG Chem, Ltd.**
**Youngdungpo-gu**
**Seoul 150-721 (KR)**

(72) Inventors:
• **CHANG, Yeong-Rae**
**Daejeon Metropolitan City 305-750 (KR)**
• **YUN, Hansik**
**DaejeonMetropolitan City 305-308 (KR)**

• **KIM, Hye-Min**
**Daejeon, 30HEM-380 (KR)**
• **KIM, Boo-Kyung**
**Daejeon Metropolitan City 302-120 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
EP-A1- 1 083 445    EP-A1- 1 418 448
WO-A2-2004/027517    GB-A- 2 372 044
JP-A- 2006 058 453    KR-A- 20050 007 360
US-A- 5 699 189    US-A1- 2005 038 137
US-A1- 2006 147 614

**Description**

[Technical Field]

The present invention relates to a coating composition for antireflection, an antireflection film manufactured using the coating composition for antireflection, and a method of manufacturing the antireflection film. More particularly, the present invention relates to a coating composition for antireflection, in which phase separation of ingredients occurs on a single coating layer that is formed by one coating process, and thus a multi-layer structure is formed to provide an optical film with antireflection characteristic; an antireflection film manufactured using the coating composition for antireflection; and a method of manufacturing the antireflection film.
This application claims priority from Korean Patent Application No. 10-2007-0115343 filed on November 13, 2007 in the Korean Intellectual Property Office, the disclosure of which is incorporated herein by reference in its entirety.

[Background Art]

An object to perform a surface treatment on the surface of a display is to improve image contrast by improving the abrasion resistance of the display and decreasing the reflection of light emitted from an external light source. The decrease of the reflection of external light can be achieved by two methods. One method causes diffused reflection by using convexo-concave shape on the surface, and the other method causes destructive interference by using a multi-coating design.
Anti-glare coating using the convexo-concave shape on the surface has been generally used in the related art. However, there have been problems in that resolut ion deteriorates in a high-resolut ion display and the sharpness of an image deteriorates due to diffused reflection. In order to solve the above-mentioned problems, Japanese Patent Application Publication No. 11-138712 has disclosed a light-diffusion film where light is diffused in a film that is manufactured by using organic filler having a refractive index different from a binder. However, since there are problems in that luminance and contrast deteriorate, the light-diffusion film needs to be modified.
Amethodof causing the destructive interference of reflected light by a multi-coating design has been disclosed in Japanese Patent Application Publication Nos. 02-234101 and 06-18704. According to this method, it is possible to obtain antireflection characteristic without the distortion of an image. In this case, light reflected from layers should have phase difference in order to allow reflected light to destructively interfere, and a waveform of reflected light should have amplitude so that reflectance can be minimized reflectance during the destructive interference. For example, when an incidence angle with respect to a single antireflection coating layer provided on the substrate is 0° , the following expressions can be obtained.

[Math Equation 1]

$$n_o n_s = n_1^2$$

$$2n_1 d_1 = (m+1/2)\lambda \quad (m=0,1,2,3...)$$

($n_o$: the refractive index of air, $n_s$: the refractive index of a substrate, $n_1$: the refractive index of a film, $d_1$: the thickness of the film, $\lambda$: the wavelength of incident light)
In general, if the refractive index of the antireflection coating layer is smaller than the refractive index of the substrate, antireflection is effective. However, in consideration of the abrasion resistance of the coating layer, it is preferable that the refractive index of the antireflection coating layer is 1.3 to 1.5 times of the refractive index of the substrate. In this case, the reflectance is smaller than 3%. However, when an antireflection coating layer is formed on a plastic film, it is not possible to satisfy the abrasion resistance of a display. For this reason, a hard coating layer of several microns needs to be provided below the antireflection coating layer. That is, the antireflection coating layer using the destructive interference includes a hard coating layer for reinforcing abrasion resistance, and one to four antireflection coating layers that are formed on the hard coating layer. Accordingly, the multi-coating method obtains antireflection characteristic without the distortion of an image. However, there is still a problem in that manufacturing cost is increased due to the multi-coating.
A method of allowing reflected light to destructively interfere by a single coating design has been proposed in recent years. The following method has been disclosed in Japanese Patent Application Publication No. 07-168006. According to the method, ultrafine particle-dispersed liquid is applied on a substrate, and the spherical shapes of fine particles are exposed to the surface so that the difference in refractive index is gradually generated between air (interface) and the particle. As a result, it is possible to obtain antireflection characteristic. However, since the shape and size of the ultrafine particles should be uniform and these particles should be uniformly distributed on the substrate, it is difficult to achieve this method by general coating processes. Further, since the amount of a binder should be equal to or smaller than a predetermined amount in order to obtain a spherical shape on the surface of the film, there is a problem in that this method is very vulnerable to abrasion resistance. Further, since the coating thickness should be also smaller than the diameter of the fine particle, it is very difficult to obtain abrasion resistance. Another approach disclosed in WO 2004/027517 A2 is achieving a self-assembling gradient layer of nanoparticles at the topmost surface of a second phase of resin having a high refractive index by the molecular interacting forces between the supramolecules and the solvent.

[Disclosure]

[Technical Problem]

It is an object of the prevent invention to provide a coating composition for antireflection, in which although the coating composition is used to form a single coating layer by one coating process, ingredients have a concentration gradient in a thickness direction of the single coating layer functionally to form two or more layers, thereby providing excellent antireflection characteristic; an antireflection film manufactured using the coating composition for antireflection; and a method of manufacturing the antireflection film.

[Technical Solution]

In order to achieve the above-mentioned object, the present invention provides a coating composition for antireflection that includes

a) a low refractive material having a refractive index of 1.2 to 1.45,
b) a high refractive material having a refractive index of 1.55 to 2.2 and comprising high refractive fine particles and an organic substituent, in which the difference in the surface energy between two materials is 5 mN/m or more,

wherein the low refractive material is a low refractive thermosetting material and includes an alkoxysilane reactant causing a sol-gel reaction,
wherein the high refractive fine particle includes one or more selected from the group consisting of titanium oxide ($TiO_2$) and indium tin oxide (ITO),
wherein the organic substituent is a thermosetting organic substituent selected from the group consisting of a silane reactant or a UV curable organic substituent selected from two or more functional acrylate monomer and oligomer,
wherein the weight ratio of low refractive material/high refractive material is 3/7 to 8/2, and
wherein the organic substituent is contained in an amount of up to 70 parts by weight, based on 100 parts by weight of the high refractive fine particles. Further, the present invention provides an antireflection film comprising a single coating layer that includes a) a low refractive material having a refractive index of 1.2 to 1.45, b) a high refractive material having a refractive index of 1.55 to 2.2 and comprising high refractive fine particles and an organic substituent, in which the difference in the surface energy between two materials is 5 mN/m or more and the low and high refractive materials have a concentration gradient in a thickness direction, wherein the low refractive material is a low refractive thermosetting material and includes an alkoxysilane reactant causing a sol-gel reaction, wherein the high refractive fine particle includes one or more selected from the group consisting of titanium oxide ($TiO_2$) and indium tin oxide (ITO), wherein the organic substituent is a thermosetting organic substituent selected from the group consisting of a silane reactant or a UV curable organic substituent selected from two or more functional acrylate monomer and oligomer, wherein the weight ratio of low refractive material/high refractive material is 3/7 to 8/2, and wherein the organic substituent is contained in an amount of up to 70 parts by weight, based on 100 parts by weight of the high refractive fine particles. Preferably the single coating layer has a thickness of 1 micrometer or less.
Further, the present invention provides a method of manufacturing an antireflection film, comprising the steps of

i) preparing a coating composition for antireflection that includes

a) a low refractive material having a refractive index of 1.2 to 1.45,
b) a high refractive material having a refractive index of 1.55 to 2.2 and comprising high refractive fine particles and an organic substituent, in which the difference in the surface energy between two materials is 5 mN/m or more;

ii) applying the coating composition on a substrate to form a coating layer;
iii) drying the coating layer to allow the low and high refractive materials to have a concentration gradient in a thickness direction of the coating layer; and
iv) curing the dried coating layer,

wherein the low refractive material is a low refractive thermosetting material and includes an alkoxysilane reactant causing a sol-gel reaction, wherein the high refractive fine particle includes one or more selected from the group consisting of titanium oxide (TiO$_2$) and indium tin Oxide (ITO), wherein the organic substituent is a thermosetting organic substituent selected from the group consisting of a silane reactant or a UV curable organic substituent selected from two or more functional acrylate monomer and oligomer, wherein the weight ratio of low refractive material/high refractive material is 3/7 to 8/2, and wherein the organic substituent is contained in an amount of up to 70 parts by weight, based on 100 parts by weight of the high refractive fine particles. Further, the present invention provides a polarizing plate, comprising i) a polarizing film and ii) the antireflection film including a single coating layer that includes a) a low refractive material having a refractive index of 1.2 to 1.45, b) a high refractive material having a refractive index of 1.55 to 2.2 and comprising high refractive fine particles and an organic substituent, in which the difference in the surface energy between two materials is 5 mN/m or more and the low and high refractive materials have a concentration gradient in a thickness direction,
wherein the low refractive material is a low refractive thermosetting material and includes an alkoxysilane reactant causing a sol-gel reaction, wherein the high refractive fine particle includes one or more selected from the group consisting of titanium oxide (TiO$_2$) and indium tin oxide (ITO), wherein the organic substituent is a thermosetting organic substituent selected from the group consisting of a silane reactant or a UV curable organic substituent selected from two or more functional acrylate monomer and oligomer, wherein the weight ratio of low refractive material/high refractive material is 3/7 to 8/2, and wherein the organic substituent is contained in an amount of up to 70 parts by weight, based on 100 parts by weight of the high refractive fine particles. Preferably the polarizing plate includes a single coating layer having a thickness of 1 micrometer or less.

Furthermore, the present invention provides a display device, comprising the antireflection film or the polarizing plate.

[Advantageous Effects]

The antireflection film according to the present invention has excellent optical characteristics, and can be manufactured by one coating process. Therefore, it is possible to reduce manufacturing cost.

[Best Mode]

Hereinafter, the present invention will be described in detail as follows.
The coating composition for ant iref lect ion according to the present invention is characterized in that it includes a) a low refractive material having a refractive index of 1.2 to 1.45, b) a high refractive material having a refractive index of 1.55 to 2.2 and comprising high refractive fine particles and an organic substituent, in which the difference in the surface energy between two materials is 5 mN/m or more.
In the present invention, although the above-mentioned coating composition is used to form a single coating layer by one coating process, phase separation of the ingredients occurs in the single coating layer due to the difference in the surface energy functionally to form a multi-layer structure. That is, there are a region having a high concentration of the high refractive material and a region having a high concentration of the low refractive material in the single coating layer. Specifically, the low refractive material moves toward the hydrophobic air side of the coating layer, and the high refractive material moves toward and is distributed in the substrate side of the coating layer. Accordingly, the single coating layer exhibits antireflection characteristic.
In the present invention, the low refractive material is a thermosett ing resin having a refract ive index of 1.2 to 1.45. In particular, it is preferable to use low refractive-fluorinated materials having both low surface energy and low refract ive index, in order to induce phase separation due to the difference in the surface energy. In addition, it is preferable that the low refractive material has a surface energy of 25 mN/m or less, in order to more effectively induce the phase separation. It is preferable that the low refractive material has a surface energy of more than 0 mN/m. The low refractive-thermosetting material includes an alkoxysilane reactant that may cause a sol-gel reaction. It is preferable that the low refractive-thermosetting material includes fluorine, in order to achieve low refractive characteristic and reduce surface energy.
The alkoxysilane reactant is a reactive oligomer that is manufactured by performing hydrolysis and a condensation reaction of alkoxysilane, fluorinated alkoxysilane, silane-based organic substituents under the conditions of water and a catalyst through a sol-gel reaction. In this case, when being measured by GPC while polystyrene is used as a reference material, the average molecular weight of the reactive oligomer is preferably in the range of 1,000 to 200,000. A condensation reaction is performed at a temperature equal to or higher than room temperature after coating, so that the alkoxysilane reactant manufactured as described above forms a net having the cross-linking structure.

The alkoxysilane can give strength to a level required in an outermost thin film. The alkoxysilane may adopt tetraalkoxysilanes or trialkoxysilanes. The alkoxysilane is preferably at least one selected from the group consisting of tetramethoxy silane, tetraethoxy silane, tetraisopropoxysilane, methyltrimethoxysilane, methyltriethoxysilane, glycydoxy propyl trimethoxysilane, and glycydoxy propyl triethoxysilane, but is not limited thereto.

The fluorinated alkoxysilane lowers the refractive index and surface tension of the coating film to facilitate a distribution difference with the high refractive material. The fluorinated alkoxysilane is preferably one or more selected from the group consisting of tridecafluorooctyltriethoxysilane, heptadecafluorodecyltrimethoxysilane, and heptadecafluorodecyltriisopropoxysilane, but is not limited thereto.

As the silane-based organic substituent, any compound may be used without limitation, as long as it can chemically bind with alkoxysilane, and is compatible and reactive to the high refractive material. The silane-based organic substituent is preferably one or more selected from the group consisting of vinyl trimethoxy silane, vinyl tri(beta-methoxyethoxy)silane, vinyl triethoxy silane, vinyl tri-n-propoxy silane, vinyl tri-n-pentoxy silane, vinylmethyl dimethoxy silane, diphenyl ethoxy vinylsilane, vinyl triisopropoxy silane, divinyl di(beta-methoxyethoxy)silane, divinyl dimethoxy si lane, divinyl diethoxy silane, divinyl di-n-propoxy silane, divinyl di(isopropoxy) silane, divinyl di-n-pentoxy silane, 3-acryloxypropyl trimethoxy silane, 3-methacryloxypropyl trimethoxy si lane, gamma-methacryloxypropyl methyl diethoxy silane, gamma-methacryloxypropyl methyl diethoxysilane, but is not limited thereto.

The basic monomer alkoxysi lane is preferably contained in an amount of 5 to 50 parts by weight, based on the 100 parts by weight of the alkoxysilane reactant. If the content is less than 5 parts by weight, it is difficult to obtain excellent abrasion resistance. If the content is more than 50 parts by weight, it is difficult to achieve low refractive characteristic of the alkoxysilane reactant and phase separation from the high refractive resin.

In order to have a refractive index of 1.2 to 1.45 and facilitate a distribution difference with the high refractive material, the fluorinated alkoxysilane is preferably used in an amount of 20 to 90 parts by weight, based on 100 parts by weight of the alkoxysi lane reactant. If the content is less than 20 parts by weight, it is difficult to achieve low refractive characteristic. If the content is more than 90 parts by weight, it is difficult to achieve the stability of liquid and scratch resistance.

In order to maintain compatibility and stability of the alkoxysilane reactant in the coating solution, the content of the silane-based organic substituent is preferably 0 to 50 parts by weight, based on 100 parts by weight of the alkoxysi lane reactant. If the content is more than 50 parts by weight, it is difficult to achieve low refractive characteristic and induce a distribution difference with the high refractive material.

The alkoxysilane reactant is prepared through a sol-gel reaction. The sol-gel reaction may adopt any method commonly used in the art. The sol-gel reaction is conducted at a reaction temperature of 20 to 150°C for 1 to 100 hours, including alkoxysilane, fluorinated alkoxysilane, a silane-based organic substituent, a catalyst, water and an organic solvent.

The catalyst to be used in the sol-gel reaction is an ingredient that is required for controlling the sol-gel reaction time. The catalyst is preferably an acid such as nitric acid, hydrochloric acid, sulfuric acid, and acetic acid, and more preferably hydrochloride, nitrate, sulfate, or acetate of zirconium or indium. In this connection, the catalyst is preferably used in the amount of 0.1 to 10 parts by weight, based on 100 parts by weight of the alkoxysilane reactant.

The water to be used in the sol-gel reaction is required for hydrolysis and condensation, and is used in the amount of 5 to 50 parts by weight, based on 100 parts by weight of the alkoxysilane reactant.

The organic solvent to be used in the sol-gel reaction is an ingredient to control a molecular weight of hydrolysis condensate. The organic solvent is preferably a single solvent or a mixed solvent selected from the group consisting of alcohols, cellosolves and ketones. In this connection, the organic solvent is preferably contained in an amount of 0.1 to 50 parts by weight, based on 100 parts by weight of the alkoxysi lane reactant.

The high refractive material having a refractive index of 1.55 to 2.2 has a surface energy, which is 5 mN/m more than that of the low refractive material, and includes high refractive fine particles and an organic substituent, and may include an organic solvent for coatability.

The high refractive fine particles increase the refractive index of the high refractive material, and may provide an antistatic effect. It is preferable that the high refractive fine particle has a refractive index of 1.55 to 2.2. Metal oxide may be used as a material for the high refractive fine particle, and the metal oxide may have conductivity. Specifically, examples thereof includes titanium oxide ($TiO_2$) and indium tin Oxide (ITO). The high refractive fine particle has a diameter of 1,000 nm or less, preferably 1 to 200 nm, more preferably 2 to 100 nm, and most preferably 10 to 50 nm.

An organic substituent is used, so that binding of the high refractive fine particles is induced in the coating layer to provide abrasion resistance. Since the low refractive material is a thermosetting material, a silane substituent is preferably used as the organic substituent. The thermosetting organic substituent includes a silane reactant or a UV curable organic substituent including two or more functional acrylate monomer or oligomer. However, the reactants are preferably typical reactants containing no fluorine.

The organic substituent is used in an amount of 70 parts by weight or less, based on 100 parts by weight of the high refractive fine particle. If the content is more than 70 parts by weight, it is difficult to achieve high refraction of the material, and the antistatic effect of antistatic fine particles may deteriorate.

Reflectance is determined depending on the content ratio and coating thickness of the low and high refractive materials. The weight ratio of low refractive material/high refractive material is 3/7 to 8/2. The coating thickness is preferably 1 micrometer or less, and more preferably 50 to 500 nm. If the coating thickness is more than 1 micrometer, it is difficult to achieve a desirable reflectance.

It is preferable that the low refractive material and the high refractive material have the same curing type.

After completing the drying and curing process, the difference in the refractive indices of the cured products of the above mentioned low and high refractive materials is preferably 0.01 or more. In this case, the single coating layer functionally forms a GRIN (gradient refractive index) structure consisting of two or more layers, so as to obtain an antiref lection effect. In this connection, when the cured low refractive material has the surface energy of 25 mN/m or less, and the difference in the surface energy between low and high refractive materials is 5 mN/m or more, phase separation occurs effectively.

The present invention provides an antireflection film manufactured by using the above-mentioned coating composition for antireflection, and a method of manufacturing the same.

The method of manufacturing an antireflection film according to the present invention comprises the steps of:

i) preparing the above-mentioned coating composition;
ii) applying the coating composition on a substrate to form a coating layer;
iii) drying the coating layer to allow the low and high refractive materials to have a concentration gradient in a thickness direction of the coating layer; and
iv) curing the dried coating layer.

In step ii), the substrate may be abrasion resistance-treated hard coating film, or glass, plastic sheet and film. Examples of the plastic film may include a triacetate cellulose film, a norbornene cycloolefin polymer, a polyester film, a poly methacrylate film, and a polycarbonate film. In the case of the hard coating film, it is suitable that the hard coating film has a refractive index of 1.45 to 1.65 and basic optical properties, adherence, scratch resistance and recoatability. In general, the hard coating layer that is disposed between the substrate and the single coating layer has an acrylate coating layer crosslinked by UV radiation, if necessary, nanoparticles to prevent abrasion resistance and contraction.

In step ii), the method of applying the coating composition may adopt various methods such as bar coating, two-roll or three-roll reverse coating, gravure coating, die coating, micro gravure coating, and comma coating, which may be selected depending on types of the substrate and rheological properties of the coating solution without any restriction. The dried coating thickness is preferably in the range of 50 to 500 nm, more preferably in the range of 100 to 300 nm.

In step iii), the drying process may be performed at a temperature of 5 to 150°C for 0.1 to 60 min in order to generate phase separation in the coating layer and to remove the organic solvent. If the temperature is less than 5°C, the organic solvent is not completely removed to deteriorate the degree of cure uponUV curing. If the temperature is more than 150°C, the curing may occur before the ingredients is distributed in the coating layer to have a concentration gradient.

In step iv), the curing process may be performed by UV or heat depending on types of the used resin. The heat curing may be performed at a temperature of 20 to 150°C for 1 to 100 min. If the temperature is less than 20°C, the curing rate is too low to reduce the curing time. If the temperature is more than 150°C, there is a problem in stability of the coating substrate. The UV curing process may be performed at UV radiation dose of 0.1 to 2 J/cm$^2$ for 1 to 600 sec. If the UV radiation dose is not within the above range, an uncured resin remains on the coating layer, and thus the surface becomes sticky not to ensure abrasion resistance. If the UV radiation dose exceeds the above range, the degree of the UV curable resin may be too increased.

The antireflection film according to the present invention, manufactured by using the above-mentioned coating composition for antireflection and the method of manufacturing an antireflection film, comprises a single coating layer that includes the above-mentioned coating composition, wherein the low and high refractive materials have a concentration gradient in a thickness direction. The antireflection film may further include a substrate provided on one side, and further include a hard coating layer between the substrate and the single coating layer.

In the antireflection film, the low refractive material, which is included in a region corresponding to 50% in a thickness direction from the surface of the antireflection layer facing air, is preferably 70% or more, more preferably 85% or more, and most preferably 95% or more, based on the total weight of the low refractive material.

The antireflection film according to the present invention has a reflectance of less than 3% to exhibit the excel lent antiref lection effect. Further, the antireflection film according to the present invention has transmittance of 96% or more, minimum reflectance of 0.5% or less, and abrasion resistance of pencil hardness, 2H. Furthermore, the antireflection film according to the present invention may have an antistatic property by the high refractive fine particles.

In the present invention, by using the above-mentioned coating composition and the method of manufacturing the antireflection film, an antireflection layer consisting of the single coating layer maybe formed in a thickness of 1 micrometer or less, and more preferably in a thickness of 50 to 500 nm. Accordingly, the present invention provides an antireflection film comprising a single coating layer that includes the above-mentioned coating composition, wherein the low and high refractive materials have a concentration gradient in a thickness direction, and the single coating layer has a thickness of 1 micrometer or less.

Further, the present invention provides a polarizing plate comprising the above-mentioned antireflection film according to the prevent invention.

Specifically, the polarizing plate according to one embodiment of the present invention comprises i) a polarizing film and ii) the antireflection film including a single coating layer that includes the above-mentioned coating composition, wherein the low and high refractive materials have a concentration gradient in a thickness direction. Preferably the single coating layer has a thickness of 1 micrometer or less.

A protection film may be provided between the polarizing film and the antireflection film. In addition, the substrate, which is used to form the single coating layer during the manufacture of the antireflection film, may be used as the protection film, as it is. The polarizing film and the antireflection film may be combined with each other by an adhesive. The polarizing film known in the art may be used. A hard coating layer may be provided on one side of the single coating layer, preferably between the polarizing plate and the single coating layer.

The present invention provides a display that includes the antireflection film or the polarizing plate. The display device may be a liquid crystal display or a plasma display. The display device according to the present invention may have the structure known in the art, except for the fact that the antireflection film according to the present invention is provided. For example, in the display device according to the present invention, the antireflection film may be provided on the outermost surface of a display panel facing an observer or on the outermost surface thereof facing a backlight. Further, the display device according to the present invention may include a display panel, a polarizing film that is provided on at least one side of the panel, and an antireflection film that is provided on the side opposite to the side of the polarizing film facing the panel.

[Mode for Invention]

Hereinafter, the preferred Examples are provided for better understanding. However, these Examples are for illustrative purposes only, and the invention is not intended to be limited by these Examples.

[Preparation Example 1] low refractive material

20 g of tetraethoxysilane, 20 g of heptadecafluorodecyltrimethoxysilane, 10 g of methacryloxypropyltrimethoxysilane, 2 g of nitric acid, 10 g of water, and 138 g of ethanol were mixed together, and reacted at 50°C for 10 hrs, followed by dilution with 498.8 g of ethanol.

At this time, it was found that the resulting composition had the solid content of 5% by weight, a refractive index of 1.36, and a surface energy of 14.0 mN/m. After the prepared composition was applied to a triacetate cellulose film having a thickness of 80 $\mu$m using a wire bar (No. 5), dried, and cured, the refractive index and surface energy of the cured product were measured. The refractive index was measured using an Ellipsometer, and the surface energy was measured using Drop shape analysis system, DSA100 (KRUSS), and water and diiodomethane ($CH_2I_2$) as a standard.

[Preparation Example 2] low refractive material

1 part by weight of dipentaerythritol hexaacrylate (DPHA) as multifunctional acrylate, 3 parts by weight of 1H,1H,6H,6H-perfluoro-1,6-hexylacrylate as fluorinated acrylate to provide low refractive index, 1 part by weight of Irgacure 907 as a photoinitiator, 20 parts by weight of diacetone alcohol (DAA) and 75 parts by weight of methylethylketone (MEK) as a solvent were uniformly mixed to prepare a low refractive-UV curable solution.

At this time, it was found that the resulting composition had the solid content of 5% by weight, a refractive index of 1.43, and a surface energy of 23.0 mN/m.

[Preparation Example 3] low refractive material

30 g of tetraethoxysilane, 20 g of methacryloxypropyltrimethoxysilane, 2 g of nitric acid, 10 g of water, and 62 g of ethanol were mixed together, and reacted at 50°C for 5 hrs, followed by dilution with 464.8 g of ethanol.

At this time, it was found that the resulting composition had the solid content of 5% by weight, a refractive index of 1.48, and a surface energy of 28.3 mN/m.

[Preparation Example 4] high refractive material

14 g of tetraethoxysilane, 1.3 g of gammamercaptopropyltrimethoxysilane, 1 g of water, 0.2 g of nitric acid, and 33.5 g of ethanol were mixed together, and subjected to sol-gel reaction at 25°C for 48 hrs, followed by mixing with 30 g of ethanol and 20 g of butylcellosolve. The sol-gel reactant was diluted with 25 g of methanol dispersing liquid containing titanium dioxide with an average diameter of 20 nm (solid content 40%) and 175 g of methanol, and then uniformly mixed to prepare a high refractive coating solution.
At this time, it was found that the resulting solut ion had the sol id content of 5% by weight, a refractive index of 1.77, and a surface energy of 31.2 mN/m.

[Preparation Example 5] high refractive material

20 g of ethanol dispersing liquid containing indium-tin oxide with an average diameter of 20 nm (solid content 15%), 1.5 g of dipentaerythritol hexaacrylate (DPHA), 0.5 g of IRG 184, 40 g of ethanol and 38 g of methylethylketone as a solvent were uniformly mixed to prepare a high refractive coating solution.
At this time, it was found that the resulting solution had the solid content of 5% by weight, a refractive index of 1.64, and a surface energy of 29.8 mN/m.

[Preparation Example 6] high refractive material

4.5 g of dipentaerythritol hexaacrylate (DPHA), 0.5 g of IRG 184, 50 g of ethanol and 45 g of methylethylketone as a solvent were uniformly mixed to prepare a high refractive coating solution.
At this time, it was found that the resulting solution had the solid content of 5% by weight, a refractive index of 1.52, and a surface energy of 35 mN/m.

[Example 1]

50 g of the low refractive material prepared in [Preparation Example 1] and 50 g of the high refractive material prepared in [Preparation Example 4] were blended, and then applied to a hard coated triacetyl cellulose film using a Meyer bar #4. The film was dried, cured in an oven at 90°C for 30 min.

[Example 2]

50 g of the low refract ive material prepared in [Preparat ion Example 2] and 50 g of the high refractive material prepared in [Preparation Example 5] were blended, and then applied to a hard coated triacetyl cellulose film using a Meyer bar #4. The film was dried, cured in an oven at 90°C for 2 min, and then cured by UV radiation at a dose of 1 J/cm$^2$.

[Example 3]

The coating solution prepared in [Example 2] was applied to a hard coated triacetyl cellulose film using a Meyer bar #6. The film was dried, cured in an oven at 90°C for 2 min, and then cured by UV radiation at a dose of 1 J/cm$^2$.

[Comparative Example 1]

A film was manufactured in the same manners as in [Example 1], except using the low refractive material prepared in [Preparation Example 3].

[Comparative Example 2]

A film was manufactured in the same manners as in [Example 2], except blending 50 g of the low refractive material prepared in [Preparation Example 2] with 50 g of the high refractive material prepared in [Preparation Example 6].

[Comparative Example 3]

50 g of the high refractive material prepared in [Preparation Example 5] were blended, and then applied to a hard coated triacetyl cellulose film using a Meyer bar #4. The film was dried, cured in an oven at 90°C for 2 min, and then cured by UV radiation at a dose of 1 J/cm$^2$. 50 g of the low refractive material prepared in [Preparation Example 2] were blended, and then applied to the high refractive and hard coated triacetyl cellulose film using a Meyer bar #4.

The film was dried, cured in an oven at 90°C for 2 min, and then cured by UV radiation at a dose of 1 J/cm$^2$.

Optical properties of the antireflection films manufactured in Examples and Comparative Examples were evaluated as follows:

1) Reflectance

The back side of the coating film was treated with black, and then reflectance was measured using a Solid Spec. 3700 spectrophotometer (Shimadzu) to determine the anti-reflection property depending on the minimum reflectance.

2) Transmittance and haze

The transmittance and haze of the coating film were evaluated using HR-100 (Murakami, Japan).

[Table 1]

|  | Example 1 | Example 2 | Example 3 | Comparative Example 1 | Comparative Example 2 | Comparative Example 3 |
|---|---|---|---|---|---|---|
| Minimum reflectance (%) | 0.6 | 0.2 | 0.7 | 4.3 | 2.5 | 1.2 |
| Transmittance (%) | 96.5 | 96.6 | 96.3 | 94.3 | 95.6 | 96.1 |
| Haze (%) | 0.2 | 0.3 | 0.3 | 0.2 | 0.3 | 0.2 |

As a result, it was found that the films manufactured according to the present invention had excellent reflectance, transmittance and haze.

Claims

1. A coating composition for antireflection, comprising a) a low refractive material having a refractive index of 1.2 to 1.45, b) a high refractive material having a refractive index of 1.55 to 2.2 and comprising high refractive fine particles and an organic substituent, wherein the difference in the surface energy between two materials is 5 mN/m or more, wherein the low refractive material is a low refractive thermosetting material and includes an alkoxysilane reactant causing a sol-gel reaction,
   wherein the high refractive fine particle includes one or more selected from the group consisting of titanium oxide (TiO$_2$) and indium tin Oxide (ITO),
   wherein the organic substituent is a thermosetting organic substituent selected from the group consisting of a silane reactant or a UV curable organic substituent selected from two or more functional acrylate monomer and oligomer,
   wherein the weight ratio of low refractive material/high refractive material is 3/7 to 8/2, and
   wherein the organic substituent is contained in an amount of up to 70 parts by weight, based on 100 parts by weight of the high refractive fine particles.

2. The coating composition for antireflection according to claim 1, wherein the low refractive material has a surface energy of 25 mN/m or less.

3. The coating composition for antireflection according to claim 1, wherein the low refractive thermosetting material includes fluorine.

4. A method of manufacturing an antireflection film, comprising the steps of:

   i) preparing the coating composition for antireflection according to any one of claims 1 to 11, which includes a) a low refractive material having a refractive index of 1.2 to 1.45, b) a high refractive material having a refractive index of 1.55 to 2.2 and comprising high refractive fine particles and an organic substituent, in which the difference in the surface energy between two materials is 5 mN/m or more;
   ii) applying the coating composition on a substrate to form a coating layer;

9

iii) drying the coating layer to allow the low and high refractive materials to have a concentration gradient in a thickness direction of the coating layer; and
iv) curing the dried coating layer,

wherein the low refractive material is a low refractive thermosetting material and includes an alkoxysilane reactant causing a sol-gel reaction,
wherein the high refractive fine particle includes one or more selected from the group consisting of titanium oxide ($TiO_2$) and indium tin Oxide (ITO),
wherein the organic substituent is a thermosetting organic substituent selected from the group consisting of a silane reactant or a UV curable organic substituent selected from two or more functional acrylate monomer and oligomer,
wherein the weight ratio of low refractive material/high refractive material is 3/7 to 8/2, and
wherein the organic substituent is contained in an amount of up to 70 parts by weight, based on 100 parts by weight of the high refractive fine particles.

5. The method of manufacturing an antireflection film according to claim 4, wherein the coating process of step ii) is performed to a dried coating thickness of 1 micrometer or less.

6. The method of manufacturing an antireflection film according to claim 4, wherein the drying process of step iii) is performed at a temperature of 5 to 150°C for 0.1 to 60 min.

7. The method of manufacturing an antireflection film according to claim 4, wherein the curing process of step iv) is performed by heat treatment at a temperature of 20 to 150°C for 1 to 100 min, or by UV radiation at a dose of 0.1 to 2 $J/cm^2$ for 1 to 600 sec.

8. An antireflection film, comprising a single coating layer that includes a) a low refractive material having a refractive index of 1.2 to 1.45, b) a high refractive material having a refractive index of 1.55 to 2.2 and comprising high refractive fine particles and an organic substituent, wherein the difference in the surface energy between two materials is 5 mN/m or more and the low and high refractive materials have a concentration gradient in a thickness direction,
wherein the low refractive material is a low refractive thermosetting material and includes an alkoxysilane reactant causing a sol-gel reaction,
wherein the high refractive fine particle includes one or more selected from the group consisting of titanium oxide ($TiO_2$) and indium tin Oxide (ITO),
wherein the organic substituent is a thermosetting organic substituent selected from the group consisting of a silane reactant or a UV curable organic substituent selected from two or more functional acrylate monomer and oligomer,
wherein the weight ratio of low refractive material/high refractive material is 3/7 to 8/2, and
wherein the organic substituent is contained in an amount of up to 70 parts by weight, based on 100 parts by weight of the high refractive fine particles.

9. The antireflection film according to claim 8, wherein the antireflection film is manufactured by a method comprising the steps of:

i) preparing the coating composition for antireflection according to claim 1;
ii) applying the coating composition on a substrate to form a coating layer;
iii) drying the coating layer to allow the low and high refractive materials to have a concentration gradient in a thickness direction of the coating layer; and
iv) curing the dried coating layer.

10. The antireflection film according to claim 8, wherein the single coating layer has a thickness of 1 micrometer or less.

11. The antireflection film according to claim 8, wherein the antireflection film includes a hard coating layer provided on one side of the single coating layer, and a substrate provided on one side of the hard coating layer.

12. The antireflection film according to claim 8, wherein the antireflection film has transmittance of 96% or more, minimum reflectance of 0.5% or less, and abrasion resistance of pencil hardness, 2H.

13. A polarizing plate, comprising i) a polarizing film and ii) an antireflection film including a single coating layer that includes a) a low refractive material having a refractive index of 1.2 to 1.45, b) a high refractive material having a refractive index of 1.55 to 2.2 and comprising high refractive fine particles and an organic substituent, wherein the difference in the surface energy between two materials is 5 mN/m or more and the low and high refractive materials have a concentration gradient in a thickness direction,

wherein the low refractive material is a low refractive thermosetting material and includes an alkoxysilane reactant causing a sol-gel reaction,

wherein the high refractive fine particle includes one or more selected from the group consisting of titanium oxide ($TiO_2$) and indium tin Oxide (ITO),

wherein the organic substituent is a thermosetting organic substituent selected from the group consisting of a silane reactant or a UV curable organic substituent selected from two or more functional acrylate monomer and oligomer,

wherein the weight ratio of low refractive material/high refractive material is 3/7 to 8/2, and

wherein the organic substituent is contained in an amount of up to 70 parts by weight, based on 100 parts by weight of the high refractive fine particles.

14. The polarizing plate according to claim 13, wherein the single coating layer has a <u>thickness of 1 micrometer or less.</u>

15. A display device, comprising the antireflection film according to claim 8.


## Patentansprüche

1. Beschichtungszusammensetzung zur Antireflexion, umfassend a) ein niedrig brechendes Material mit einem Brechungsindex von 1,2 bis 1,45, b) ein hoch brechendes Material mit einem Brechungsindex von 1,55 bis 2,2 und umfassend hoch brechende Feinpartikel und einen organischen Substituenten, mit einem Unterschied in der Oberflächenenergie zwischen den beiden Materialien von 5 mN/m oder mehr,

wobei das niedrig brechende Material ein niedrig brechendes wärmehärtendes Material ist und einen Alkoxysilanreaktanten umfasst, der eine Solgelreaktion bewirkt,

wobei die hoch brechenden Feinpartikel einen oder mehrere, ausgewählt aus der Gruppe, bestehend aus Titandioxid ($TiO_2$) und Indium-Zinn-Oxid (ITO), umfassen,

wobei der organische Substituent ein wärmehärtender organischer Substituent ist, ausgewählt aus der Gruppe, bestehend aus einem Silanreaktanten oder einem UV-härtbaren organischen Substituenten, ausgewählt aus zwei oder mehreren funktionellen Acrylatmonomeren oder Oligomeren,

wobei das Gewichtsverhältnis niedrig brechendes Material/hoch brechendes Material von 3/7 bis 8/2 ist, und

wobei der organische Substituent in einer Menge von bis zu 70 Gewichtsteilen, bezogen auf 100 Gewichtsteile der hoch brechenden Feinpartikel, enthalten ist.

2. Beschichtungszusammensetzung zur Antireflexion nach Anspruch 1, wobei das niedrig brechende Material eine Oberflächenenergie von 25 mN/m oder weniger hat.

3. Beschichtungszusammensetzung zur Antireflexion nach Anspruch 1, wobei das niedrig brechende wärmehärtende Material Fluor umfasst.

4. Verfahren zum Herstellen eines Antireflexionsfilms, das die Schritte umfasst:

   i) Herstellen der Beschichtungszusammensetzung zur Antireflexion nach einem der Ansprüche 1 bis 11, die umfasst a) ein niedrig brechendes Material mit einem Brechungsindex von 1,2 bis 1,45, b) ein hoch brechendes Material mit einem Brechungsindex von 1,55 bis 2,2 und umfassend hoch brechende Feinpartikel und einen organischen Substituenten, wobei der Unterschied in der Oberflächenenergie zwischen den beiden Materialien 5 mN/m oder mehr ist;

   ii) Anwenden der Beschichtungszusammensetzung auf einem Substrat, um eine Beschichtungsschicht zu bilden;

   iii) Trocknen der Beschichtungsschicht, um es den niedrig und hoch brechenden Materialien zu erlauben, einen Konzentrationsgradienten in einer Richtung der Dicke der Beschichtungsschicht zu haben; und

   iv) Härten der getrockneten Beschichtungsschicht,

   wobei das niedrig brechende Material ein niedrig brechendes wärmehärtendes Material ist, und einen Alkoxysilanreaktanten umfasst, der eine Solgelreaktion bewirkt,

   wobei der hoch brechende Feinpartikel einen oder mehrere, ausgewählt aus der Gruppe, bestehend aus Titandioxid ($TiO_2$) und Indium-Zinn-Oxid (ITO) umfasst,

   wobei der organische Substituent ein wärmehärtender organischer Substituent ist, der ausgewählt ist aus der Gruppe, bestehend aus einem Silanreaktanten oder einem UV-härtbaren organischen Substituenten, ausgewählt aus zwei oder mehreren funktionellen Acrylatmonomeren oder Oligomeren, wobei das Gewichtsverhältnis niedrig brechendes Material/hoch brechendes Material 3/7 bis 8/2 ist, und wobei der organische Substituent in einer Menge von bis zu 70 Gewichtsteilen, bezogen auf 100 Gewichtsteile der hoch brechenden Feinpartikel, ist.

5. Verfahren zum Herstellen eines Antireflexionsfilms nach Anspruch 4, wobei der Beschichtungsprozess des Schritts ii) durchgeführt wird, um eine getrocknete Beschichtungsdicke von 1 $\mu$m oder weniger zu erhalten.

6. Verfahren zum Herstellen eines Antireflexionsfilms nach Anspruch 4, wobei der Trocknungsprozess des Schritts iii) bei einer Temperatur von 5 bis 150°C für 0,1 bis 60 min durchgeführt wird.

7. Verfahren zum Herstellen eines Antireflexionsfilms nach Anspruch 4, wobei der Härtungsprozess des Schritts iv) durch Wärmebehandlung bei einer Temperatur von 20 bis 150°C für 1 bis 100 min oder durch UV-Bestrahlung mit einer Dosis von 0,1 bis 2 J/cm$^2$ für 1 bis 600 Sek. durchgeführt wird.

8. Antireflexionsfilm, umfassend eine einzelne Beschichtungsschicht, die umfasst

   a) ein niedrig brechendes Material mit einem Brechungsindex von 1,2 bis 1,45,
   b) ein hoch brechendes Material mit einem Brechungsindex von 1,55 bis 2,2 und

   umfassend hoch brechende Feinpartikel und einen organischen Substituenten, wobei der Unterschied in der Oberflächenenergie zwischen den zwei Materialien 5 mN/m oder mehr ist und die hoch und niedrig brechenden Materialien einen Konzentrationsgradienten in Richtung der Dicke aufweisen, wobei das niedrig brechende Material ein niedrig brechendes wärmehärtendes Material ist und einen Alkoxysilanreaktanten umfasst, der eine Solgelreaktion bewirkt, wobei der hoch brechenden Feinpartikel einen oder mehrere, ausgewählt aus der Gruppe, bestehend aus Titandioxid (TiO$_2$) und Indium-Zinn-Oxid (ITO), umfasst, wobei der organische Substituent ein wärmehärtender organischer Substituent, ausgewählt aus der Gruppe, bestehend aus einem Silanreaktanten oder einem UV-härtbaren organischen Substituenten, ausgewählt aus zwei oder mehreren funktionellen Acrylatmonomeren oder Oligomeren, ist, wobei das Gewichtsverhältnis von niedrig brechendem Material/hoch brechendem Material von 3/7 bis 8/2 ist, und wobei der organische Substituent in einer Menge von bis zu 70 Gewichtsteilen, bezogen auf 100 Gewichtsteile der hoch brechenden Feinpartikel, enthalten ist.

9. Antireflexionsfilm nach Anspruch 8, wobei der Antireflexionsfilm durch ein Verfahren hergestellt wird, das die Schritte umfasst:

   i) Herstellen der Beschichtungszusammensetzung zur Antireflexion nach Anspruch 1;
   ii) Anwenden der Beschichtungszusammensetzung auf ein Substrat, um eine Beschichtungsschicht zu bilden;
   iii) Trocknen der Beschichtungsschicht, um es den niedrig und hoch brechenden Materialien zu erlauben, einen Konzentrationsgradienten hinsichtlich einer Richtung der Dicke der Beschichtungsschicht zu haben; und
   iv) Härten der getrockneten Beschichtungsschicht.

10. Antireflexionsfilm nach Anspruch 8, wobei die einzelne Beschichtungsschicht eine Dicke von 1 $\mu$m oder weniger hat.

11. Antireflexionsfilm nach Anspruch 8, wobei der Antireflexionsfilm eine harte Beschichtungsschicht umfasst, die auf einer Seite der einzelnen Beschichtungsschicht bereitgestellt ist und ein Substrat, das auf einer Seite der harten Beschichtungsschicht bereitgestellt ist.

12. Antireflexionsfilm nach Anspruch 8, wobei der Antireflexionsfilm eine Transmission von 96% oder mehr, eine Minimumreflexion von 0,5% oder weniger und einen Abriebwiderstand der Bleistifthärte 2 H hat.

13. Polarisationsplatte, umfassend i) einen Polarisationsfilm und ii) einen Antireflexionsfilm, umfassend eine einzelne Beschichtungsschicht, die umfasst

   a) ein niedrig brechendes Material mit einem Brechungsindex von 1,2 bis 1,45,
   b) ein hoch brechendes Material mit einem Brechungsindex von 1,55 bis 2,2 und

umfassend hoch brechende Feinpartikel und einen organischen Substituenten, mit einem Unterschied in der Oberflächenenergie zwischen den beiden Materialien von 5mN/m oder mehr,
wobei das niedrig brechende Material ein niedrig brechendes wärmehärtendes Material ist und einen Alkoxysilanreaktanten umfasst, der eine Solgelreaktion bewirkt,
wobei die hoch brechenden Feinpartikel einen oder mehrere, ausgewählt aus der Gruppe, bestehend aus Titandioxid ($TiO_2$) und Indium-Zinn-Oxid (ITO), umfassen,
wobei der organische Substituent ein wärmehärtender organischer Substituent ist, ausgewählt aus der Gruppe, bestehend aus einem Silanreaktanten oder einem UV-härtbaren organischen Substituenten, ausgewählt aus zwei oder mehreren funktionellen Acrylatmonomeren oder Oligomeren,
wobei das Gewichtsverhältnis niedrig brechendes Material/hoch brechendes Material von 3/7 bis 8/2 ist, und
wobei der organische Substituent in einer Menge von bis zu 70 Gewichtsteilen, bezogen auf 100 Gewichtsteile der hoch brechenden Feinpartikel, enthalten ist.

**14.** Polarisationsplatte nach Anspruch 13, wobei die einzelne Beschichtungsschicht eine Dicke von 1 $\mu$m oder weniger hat.

**15.** Anzeigevorrichtung, umfassend den Antireflexionsfilm nach Anspruch 8.

## Revendications

**1.** Composition de revêtement antireflet, comprenant a) un matériau faiblement réfringent ayant un indice de réfraction de 1,2 à 1,45, b) un matériau hautement réfringent ayant un indice de réfraction de 1,55 à 2,2 et comprenant de fines particules hautement réfringentes et un substituant organique, dans lequel la différence en énergie de surface entre les deux matériaux est de 5 mN/m ou supérieure,
dans laquelle le matériau faiblement réfringent est un matériau thermodurcissable faiblement réfringent et renfermant un réactif alkoxysilane causant une réaction sol-gel,
dans laquelle la fine particule hautement réfringente contient un ou plusieurs constituants sélectionnés dans le groupe constitué d'oxyde de titane ($TiO_2$) et d'oxyde d'étain-indium (ITO),
dans laquelle le substituant organique est un substituant organique thermodurcissable sélectionné dans le groupe constitué d'un réactif silane ou d'un substituant organique durcissable par UV sélectionné parmi deux ou plusieurs d'un monomère et oligomère à multifonction acrylate,
dans laquelle le rapport pondéral du matériau faiblement réfringent/hautement réfringent est de 3/7 à 8/2, et
dans laquelle le substituant organique est contenu en une quantité allant jusqu'à 70 parties en poids, par rapport à 100 parties en poids des fines particules hautement réfringentes.

**2.** Composition de revêtement antireflet selon la revendication 1, dans laquelle le matériau faiblement réfringent a une énergie de surface de 25 mN/m ou inférieure.

**3.** Composition de revêtement antireflet selon la revendication 1, dans laquelle le matériau thermodurcissable faiblement réfringent contient du fluor.

**4.** Procédé de fabrication d'un film antireflet, comprenant les étapes consistant à :

i) préparer la composition de revêtement antireflet selon l'une quelconque des revendications 1 à 11, qui contient a) un matériau faiblement réfringent ayant un indice de réfraction de 1,2 à 1,45, b) un matériau hautement réfringent ayant un indice de réfraction de 1,55 à 2,2 et comprenant de fines particules hautement réfringentes et un substituant organique, dans laquelle la différence en énergie de surface entre les deux matériaux est de 5 mB/m ou supérieure ;
ii) appliquer la composition de revêtement sur un substrat de manière à former une couche de revêtement ;
iii) sécher la couche de revêtement de manière à permettre aux matériaux faiblement et hautement réfringents d'avoir un gradient de concentration dans le sens de l'épaisseur de la couche de revêtement ; et
iv) sécher la couche de revêtement séchée,

dans lequel le matériau faiblement réfringent est un matériau thermodurcissable faiblement réfringent et renferme un réactif alkoxysilane causant une réaction sol-gel,
dans lequel la fine particule hautement réfringente renferme un ou plusieurs constituants sélectionnés dans le groupe constitué d'oxyde de titane ($TiO_2$) et d'oxyde indium-étain (ITO),

dans lequel le substituant organique est un substituant organique thermodurcissable sélectionné dans le groupe constitué d'un réactif silane ou d'un substituant organique durcissable par UV sélectionné parmi deux ou plusieurs d'un monomère et oligomère à fonction acrylate,
dans lequel le rapport pondéral du matériau faiblement réfringent/hautement réfringent est de 3/7 à 8/2, et
dans lequel le substituant organique est contenu en une quantité allant jusqu'à 70 parties en poids, par rapport à 100 parties en poids des fines particules hautement réfringentes.

5. Procédé de fabrication d'un film antireflet selon la revendication 4, dans lequel le processus de revêtement de l'étape ii) est réalisé jusqu'à une épaisseur de revêtement à l'état sec de 1 micromètre ou inférieure.

6. Procédé de fabrication d'un film antireflet selon la revendication 4, dans lequel le processus de séchage de l'étape iii) est réalisé à une température de 5 à 150 °C pendant 0,1 à 60 minutes.

7. Procédé de fabrication d'un film antireflet selon la revendication 4, dans lequel le processus de séchage de l'étape iv) est réalisé par traitement thermique à une température de 20 à 150 °C pendant 1 à 100 minutes, ou par rayonnement UV à une dose de 0,1 à 2 J/cm$^2$ pendant 1 à 600 secondes.

8. Film antireflet comprenant une monocouche de revêtement qui renferme a) un matériau faiblement réfringent ayant un indice de réfraction de 1,2 à 1,45, b) un matériau hautement réfringent ayant un indice de réfraction de 1,55 à 2,2 et comprenant de fines particules hautement réfringentes et un substituant organique, dans lequel la différence en énergie de surface entre deux matériaux est de 5 mN/m ou supérieure et les matériaux faiblement et hautement réfringents ont un gradient de concentration dans le sens de l'épaisseur,
dans lequel le matériau faiblement réfringent est un matériau thermodurcissable faiblement réfringent et renferme un réactif alkoxyloxane causant une réaction sol-gel,
dans lequel la fine particule hautement réfringente renferme un ou plusieurs constituants sélectionnés dans le groupe constitué d'oxyde de titane (TiO$_2$) et d'oxyde indium-étain (ITO),
dans lequel le substituant organique est un substituant organique thermodurcissable sélectionné dans le groupe constitué d'un réactif silane ou d'un substituant organique durcissable par UV sélectionné parmi deux ou plusieurs d'un monomère et oligomère à fonction acrylate,
dans lequel le rapport pondéral du matériau faiblement réfringent/hautement réfringent est de 3/7 à 8/2 et
dans lequel le substituant organique est contenu en une quantité allant jusqu'à 70 parties en poids, par rapport à 100 parties en poids des fines particules hautement réfringentes.

9. Film antireflet selon la revendication 8, ledit film antireflet étant fabriqué par un procédé comprenant les étapes consistant à :

i) préparer la composition de revêtement antireflet selon la revendication 1 ;
ii) appliquer la composition de revêtement sur un substrat afin de former une couche de revêtement ;
iii) sécher la couche de revêtement pour permettre aux matériaux faiblement et hautement réfringents d'avoir un gradient de concentration dans le sens de l'épaisseur de la couche de revêtement ; et
iv) durcir la couche de revêtement séchée.

10. Film antireflet selon la revendication 8, dans lequel la monocouche de revêtement a une épaisseur d'un micromètre ou inférieure.

11. Film antireflet selon la revendication 8, ledit film antireflet renfermant une couche de revêtement dure pourvue sur un côté de la monocouche de revêtement, et un substrat pourvu sur un autre côté de la couche de revêtement dure.

12. Film antireflet selon la revendication 8, dans lequel le film antireflet a une transmittance égale ou supérieure à 96 %, une réflectance minimale égale ou inférieure à 0,5 %, et une résistance à l'abrasion d'une dureté au crayon de 2H.

13. Plaque de polarisation, comprenant i) un film de polarisation et ii) un film antireflet renfermant une monocouche de revêtement qui contient a) un matériau faiblement réfringent ayant un indice de réfraction de 1,2 à 1,45, b) un matériau hautement réfringent ayant un indice de réfraction de 1,55 à 2,2 et comprenant de fines particules hautement réfringentes et un substituant organique, dans laquelle la différence en énergie de surface entre deux matériaux est de 5 mN/m ou supérieure et les matériaux faiblement et hautement réfringents ont un gradient de concentration dans le sens de l'épaisseur,
dans laquelle le matériau faiblement réfringent est un matériau thermodurcissable faiblement réfringent et renferme un réactif alkoxysilane causant une réaction sol-gel,

dans laquelle la fine particule hautement réfringente renferme un ou plusieurs constituants sélectionnés dans le groupe constitué d'oxyde de titane ($TiO_2$) et d'oxyde indium-étain (ITO),

dans laquelle le substituant organique est un substituant organique thermodurcissable sélectionné dans le groupe constitué d'un réactif silane ou d'un substituant organique durcissable par UV sélectionné parmi deux ou plusieurs d'un monomère et oligomère à fonction acrylate,

dans laquelle le rapport pondéral du matériau faiblement réfringent/hautement réfringent est de 3/7 à 8/2, et

dans laquelle le substituant organique est contenu en une quantité allant jusqu'à 70 parties en poids, par rapport à 100 parties en poids des fines particules hautement réfringentes.

14. Plaque de polarisation selon la revendication 13, dans laquelle la monocouche de revêtement a une épaisseur d'un micromètre ou inférieure.

15. Dispositif d'affichage, comprenant un film antireflet selon la revendication 8.

EP 2 209 860 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020070115343
- JP 11138712 A
- JP 2234101 A
- JP 6018704 A
- JP 7168006 A
- WO 2004027517 A2